# EUROPÄISCHE PATENTANMELDUNG

(11) **EP 2 143 924 A1**
(43) Veröffentlichungstag der Anmeldung: **13.01.2010**
(21) Anmeldenummer: 08105531.1
(22) Anmeldetag: 09.10.2008
(51) Int. Cl.: F02F 1/24, F02B 37/18

(54) **Aufgeladene Brennkraftmaschine**

(30) Priorität: 11.07.2008 EP 08104729; 16.07.2008 EP 08104766
(71) Anmelder: Ford Global Technologies, LLC, Dearborn, MI 48126 (US)
(72) Erfinder: Friedfeldt, Rainer, 50354 Hürth (DE); Kuhlbach, Kai, 51427, Bergisch Gladbach (DE); Wirth, Martin, 42853, Remscheid (DE)
(74) Vertreter: Drömer, Hans-Carsten

(57) **Zusammenfassung**

Die Erfindung betrifft eine aufgeladene Brennkraftmaschine mit
- mindestens einem Zylinderkopf (1) mit mindestens zwei Zylindern (11a, 11b, 11c), bei dem jeder Zylinder (11a, 11b, 11c) mindestens eine Auslaßöffnung (3a, 3b) zum Abführen der Abgase aus dem Zylinder (11a, 11b, 11c) aufweist, wobei sich stromabwärts an jede Auslaßöffnung (3a, 3b) eine Abgasleitung (4a, 4b) anschließt, und
- mindestens einer Turbine (7a), wobei
- die Abgasleitungen (4a, 4b) von mindestens zwei Zylindern (11a, 11b, 11c) unter Ausbildung eines integrierten Abgaskrümmers (2) innerhalb des Zylinderkopfes (1) zu einer Gesamtabgasleitung (6) zusammenführen, und
- diese Gesamtabgasleitung (6) mit der Turbine (7a) verbunden ist.

Es soll eine aufgeladene Brennkraftmaschine der genannten Art bereitgestellt werden, die insbesondere hinsichtlich der Aufladung optimiert ist.

Erreicht wird dies mit einer aufgeladenen Brennkraftmaschine der oben genannten Art, die dadurch gekennzeichnet ist, daß
- eine Abgriffstelle (8) zur Entnahme von Abgas im Zylinderkopf (1) an dem integrierten Abgaskrümmer (2) vorgesehen ist, an der zumindest ein Teil des aus den Zylindern (11a, 11b, 11c) abgeführten Abgases dem Abgaskrümmer (2) innerhalb des Zylinderkopfes (1) entnehmbar ist, wobei sich stromabwärts der Abgriffstelle (8) eine Bypaßleitung (10) anschließt, mit der das entnommene Abgas an der Turbine (7a) vorbeiführbar ist.

## Beschreibung

Die Erfindung betrifft eine aufgeladene Brennkraftmaschine mit
- mindestens einem Zylinderkopf mit mindestens zwei Zylindern, bei dem jeder Zylinder mindestens eine Auslaßöffnung zum Abführen der Abgase aus dem Zylinder aufweist, wobei sich stromabwärts an jede Auslaßöffnung eine Abgasleitung anschließt, und
- mindestens einer Turbine, wobei
- die Abgasleitungen von mindestens zwei Zylindern unter Ausbildung eines integrierten Abgaskrümmers innerhalb des Zylinderkopfes zu einer Gesamtabgasleitung zusammenführen, und
- diese Gesamtabgasleitung mit der Turbine verbunden ist.

Im Rahmen der vorliegenden Erfindung umfaßt der Begriff Brennkraftmaschine Dieselmotoren, Ottomotoren, aber auch Hybrid-Brennkraftmaschinen.

Brennkraftmaschinen verfügen über einen Zylinderblock und einen Zylinderkopf, die zur Ausbildung der einzelnen Zylinder d. h. Brennräume miteinander verbunden werden.

Der Zylinderblock weist zur Aufnahme der Kolben bzw. der Zylinderrohre eine entsprechende Anzahl an Zylinderbohrungen auf. Die Kolben werden axial beweglich in den Zylinderrohren geführt und bilden zusammen mit den Zylinderrohren und dem Zylinderkopf die Brennräume der Brennkraftmaschine aus.

Der Zylinderkopf dient häufig auch zur Aufnahme des Ventiltriebs. Um den Ladungswechsel zu steuern, benötigt eine Brennkraftmaschine Steuerorgane und Betätigungseinrichtungen zur Betätigung dieser Steuerorgane. Im Rahmen des Ladungswechsels erfolgt das Ausschieben der Verbrennungsgase über die Auslaßöffnungen und das Füllen des Brennraums d. h. das Ansaugen des Frischgemisches bzw. der Frischluft über die Einlaßöffnungen. Zur Steuerung des Ladungswechsels werden bei Viertaktmotoren nahezu ausschließlich Hubventile als Steuerorgane verwendet, die während des Betriebs der Brennkraftmaschine eine oszillierende Hubbewegung ausführen und auf diese Weise die Ein- und Auslaßöffnungen freigeben und verschließen. Der für die Bewegung der Ventile erforderliche Ventilbetätigungsmechanismus einschließlich der Ventile selbst wird als Ventiltrieb bezeichnet.

Es ist die Aufgabe des Ventiltriebs die Einlaß- und Auslaßöffnungen der Brennkammer rechtzeitig freizugeben bzw. zu schließen, wobei eine schnelle Freigabe möglichst großer Strömungsquerschnitte angestrebt wird, um die Drosselverluste in den ein- bzw. ausströmenden Gasströmungen gering zu halten und eine möglichst gute Füllung des Brennraumes mit Frischgemisch bzw. ein effektives d.h. vollständiges Abführen der Abgase zu gewährleisten. Nach dem Stand der Technik werden daher auch zunehmend zwei oder mehr Einlaß- bzw. Auslaßöffnungen vorgesehen.

Die Einlaßkanäle, die zu den Einlaßöffnungen führen, und die Auslaßkanäle bzw. Abgasleitungen, die sich an die Auslaßöffnungen anschließen, sind nach dem Stand der Technik zumindest teilweise im Zylinderkopf integriert. Sind zwei oder mehr Auslaßöffnungen je Zylinder vorgesehen, werden die Abgasleitungen jedes Zylinders häufig - innerhalb des Zylinderkopfes - zu einer dem Zylinder zugehörigen Teilabgasleitung zusammengeführt, bevor diese Teilabgasleitungen dann zu einer Gesamtabgasleitung zusammengeführt werden. Die Zusammenführung der Abgasleitungen bis hin zu der Gesamtabgasleitung wird im allgemein und im Rahmen der vorliegenden Erfindung als Abgaskrümmer bzw. Krümmer bezeichnet.

Stromabwärts des Krümmers werden die Abgase dann gegebenenfalls der Turbine eines Abgasturboladers und/oder einem oder mehreren Abgasnachbehandlungssystemen zugeführt.

Dabei ist man zum einen bemüht, die Turbine möglichst nahe am Auslaß der Brennkraftmaschine anzuordnen, um auf diese Weise die Abgasenthalpie der heißen Abgase, die maßgeblich vom Abgasdruck und der Abgastemperatur bestimmt wird, optimal nutzen zu können und ein schnelles Ansprechverhalten des Turboladers zu gewährleisten. Zum anderen soll auch der Weg der heißen Abgase zu den verschiedenen Abgasnachbehandlungssystemen möglichst kurz sein, damit den Abgasen wenig Zeit zur Abkühlung eingeräumt wird und die Abgasnachbehandlungssysteme möglichst schnell ihre Betriebstemperatur bzw. Anspringtemperatur erreichen, insbesondere nach einem Kaltstart der Brennkraftmaschine.

In diesem Zusammenhang ist man daher grundsätzlich bemüht, die thermische Trägheit des Teilstücks der Abgasleitung zwischen Auslaßöffnung am Zylinder und Abgasnachbehandlungssystem bzw. zwischen Auslaßöffnung am Zylinder und Turbine zu minimieren, was durch Reduzierung der Masse und der Länge dieses Teilstückes erreicht werden kann. Geeignete Werkstoffe sind dabei ebenfalls zielführend.

Im Hinblick auf den Einsatz eines Turboladers wird angestrebt, den Druckverlust in der Abgasströmung bis zum Eintritt in die Turbine möglichst gering zu halten, was durch eine geeignete Strömungsführung und eine weitestgehende Verkürzung der zu überbrückenden Wegstrecke d.h. der relevanten Abgasleitungen erreicht werden kann. Zur Verbesserung des Ansprechverhaltens sollte das Abgasvolumen in den Abgasleitungen stromaufwärts der Turbine möglichst gering sein.

Um die zuvor genannten Ziele zu erreichen, wird nach dem Stand der Technik der Abgaskrümmer vollständig im Zylinderkopf integriert. Ein derartiger Zylinderkopf zeichnet sich durch eine sehr kompakte Bauweise aus, wobei die Gesamtwegstrecke der Abgasleitungen des Abgaskrümmers und das Volumen der Abgasleitungen stromaufwärts der Turbine durch die Integration minimiert werden.

Ein Zylinderkopf mit mindestens zwei Zylindern, bei dem sich an jede Auslaßöffnung eine Abgasleitung anschließt und die Abgasleitungen von mindestens zwei Zylindern innerhalb des Zylinderkopfes zu einer Gesamtabgasleitung zusammenführen, ist daher auch ein Gegenstand der vorliegenden Erfindung.

Die Verwendung eines derartigen Zylinderkopfes führt des Weiteren zu einer geringeren Anzahl an Bauteilen und folglich zu einer Verringerung der Kosten, insbesondere der Montage- und Bereitstellungskosten. Ein dichtes Packaging der Antriebseinheit wird durch die kompakte Bauweise ermöglicht.

Um die Aufladung einer Brennkraftmaschine bzw. die Drehmomentcharakteristik einer aufgeladenen Brennkraftmaschine, wie sie Gegenstand der vorliegenden Erfindung ist, zu verbessern, sind weitere Maßnahmen erforderlich. Die Gründe hierfür werden im Folgenden kurz erläutert.

In der Regel wird für die Aufladung einer Brennkraftmaschine ein Abgasturbolader eingesetzt, bei dem ein Verdichter und eine Turbine auf derselben Welle angeordnet sind, wobei der heiße Abgasstrom der Turbine zugeführt wird und sich unter Energieabgabe in dieser Turbine entspannt, wodurch die Welle in Drehung versetzt wird. Die vom Abgasstrom an die Turbine und schließlich an die Welle abgegebene Energie wird für den Antrieb des ebenfalls auf der Welle angeordneten Verdichters genutzt. Der Verdichter fördert und komprimiert die ihm zugeführte Ladeluft, wodurch eine Aufladung der Zylinder erreicht wird.

Die Aufladung dient in erster Linie der Leistungssteigerung der Brennkraftmaschine. Die für den Verbrennungsprozeß benötigte Luft wird dabei verdichtet, wodurch jedem Zylinder pro Arbeitsspiel d. h. pro Arbeitsprozeß eine größere Luftmasse zugeführt werden kann. Dadurch können die Kraftstoffmasse und damit der Mitteldruck pₘₑ gesteigert werden.

Die Aufladung ist daher ein geeignetes Mittel, bei unverändertem Hubraum die Leistung einer Brennkraftmaschine zu steigern oder bei gleicher Leistung den Hubraum zu reduzieren. In jedem Fall führt die Aufladung zu einer Erhöhung der Bauraumleistung und einer günstigeren Leistungsmasse. Bei gleichen Fahrzeugrandbedingungen läßt sich so das Lastkollektiv zu höheren Lasten hin verschieben, wo der spezifische Kraftstoffverbrauch niedriger ist. Letzteres wird auch als Downsizing bezeichnet.

Die Aufladung unterstützt folglich das ständige Bemühen in der Entwicklung von Verbrennungsmotoren, den Kraftstoffverbrauch zu minimieren, d. h. den Wirkungsgrad der Brennkraftmaschine zu verbessern. Ein weiteres grundsätzliches Ziel ist es, die Schadstoffemissionen zu reduzieren. In diesem Zusammenhang kann die Aufladung der Brennkraftmaschine ebenfalls zielführend sein. Bei gezielter Auslegung der Aufladung können nämlich Vorteile im Wirkungsgrad und bei den Abgasemissionen erzielt werden.

Nach dem Stand der Technik wird ein spürbarer Drehmomentabfall bei Unterschreiten einer bestimmten Drehzahl beobachtet. Dieser Effekt ist unerwünscht und zählt zu den gravierendsten Nachteilen der Abgasturboaufladung.

Verständlich wird dieser Drehmomentabfall, wenn berücksichtigt wird, daß das Ladedruckverhältnis vom Turbinendruckverhältnis abhängt. Wird beispielsweise bei einem Dieselmotor die Motorendrehzahl verringert, führt dies zu einem kleineren Abgasmassenstrom und damit zu einem kleineren Turbinendruckverhältnis. Dies hat zur Folge, daß zu niedrigeren Drehzahlen hin das Ladedruckverhältnis ebenfalls abnimmt, was gleichbedeutend ist mit einem Drehmomentabfall.

Grundsätzlich kann dabei dem Abfall des Ladedruckes durch eine Verkleinerung des Turbinenquerschnittes und der damit einhergehenden Steigerung des Turbinendruckverhältnisses entgegengewirkt werden. Dieser Vorgehensweise d. h. der Verkleinerung des Turbinenquerschnittes sind Grenzen gesetzt, da die gewünschte Aufladung und Leistungssteigerung auch bei hohen Drehzahlen uneingeschränkt und in dem gewünschten Maße möglich sein soll.

Letzterem kann durch eine kleine Auslegung des Turbinenquerschnittes und gleichzeitiger Abgasabblasung begegnet werden, wobei die Abgasabblasung beispielsweise mittels Ladedruck oder mittels Abgasdruck gesteuert werden kann. Eine derartige Turbine wird auch als Waste-Gate-Turbine bezeichnet. Überschreitet der Abgasmassenstrom eine kritische Größe wird ein Teil des Abgasstromes im Rahmen der sogenannten Abgasabblasung mittels einer Bypaßleitung an der Turbine vorbei geführt.

Da beim Einsatz einer Waste-Gate-Turbine - wie zuvor angemerkt - Abgas an der Turbine vorbeiführbar sein muß, ist eine Bypaßleitung vorzusehen, die stromaufwärts der Turbine aus einer Abgas führenden Leitung, beispielsweise der Gesamtabgasleitung, abzweigt und stromabwärts der Turbine in der Regel wieder mit dem durch die Turbine hindurchgeführten Abgasstrom zusammengeführt wird. Ist stromabwärts der Turbine ein Abgasnachbehandlungssystem vorgesehen, muß das abgeblasene Abgas diesem System ebenfalls zugeführt werden, wenn auf ein zusätzliches Abgasnachbehandlungssystem gleicher Bauart in der Bypaßleitung verzichtet werden soll, was aus Kostengründen und im Hinblick auf ein dichtes Packaging zu bevorzugen ist.

Dabei können der durch die Turbine hindurchgeführte Abgasstrom und der abgeblasene Abgasstrom entweder stromaufwärts des Abgasnachbehandlungssystems zusammengeführt werden oder aber die beiden Abgasströme werden dem Abgasnachbehandlungssystem getrennt zugeführt. Bei einer gewollt motornahen Anordnung der Turbine und einem dichten Packaging, insbesondere bei Einsatz eines integrierten Abgaskrümmers, wird die Zuführung der Abgasströme zum Abgasnachbehandlungssystem durch die beengten Platzverhältnisse am Zylinderkopf erschwert. Im Hinblick auf die Abgasnachbehandlung d. h. einer möglichst effizienten Konvertierung der Schadstoffe im Abgasnachbehandlungssystem kann die Zuführung dabei in der Regel nicht in geeigneter Weise d. h. nicht in der bevorzugten Weise erfolgen.

Als Folge der nicht optimalen Zuführung der Abgasströme zum Abgasnachbehandlungssystem liegt die Konvertierungsrate unter der theoretisch erreichbaren Rate, was häufig dazu führt, daß das Abgasnachbehandlungssystem größer d. h. voluminöser zu dimensionieren ist, um die infolge nicht optimaler Abgaszuführung verschlechterte Konvertierung wieder auszugleichen d.h. zu kompensieren.

Größer dimensionierte Abgasnachbehandlungssysteme benötigen aber mehr Bauraum, was einem dichten Packaging entgegen steht, und sind aufgrund der größeren Mengen an Edelmetallen zur Beschichtung bzw. Herstellung wesentlich kostenintensiver.

Schließlich ist in der Bypaßleitung ein Steuerorgan zur Einstellung des entnommenen Abgasstroms, insbesondere zum Öffnen und Verschließen der Leitung, anzuordnen. Nach dem Stand der Technik wird die Bypaßleitung häufig zumindest teilweise in der Turbine bzw. im Turbinengehäuse integriert, wobei auch das Steuerorgan dabei in der Regel im bzw. am Turbinengehäuse angeordnet wird. Der für das thermisch hochbelastete Turbinengehäuse verwendete - häufig nickelhaltige - Werkstoff ist vergleichsweise kostenintensiv, insbesondere im Vergleich zu dem für die Fertigung des Zylinderkopfes eingesetzten Material, beispielweise Aluminium. Folglich führen sämtliche Maßnahmen, welche das Volumen und Gewicht des Turbinengehäuses erhöhen, wie beispielsweise die Integration der Bypaßleitung und/oder des Steuerorgans, zu höheren Herstellungskosten des Turbinengehäuses bzw. der Turbine.

Zudem wird der Fertigungsprozeß des Gehäuses durch die Integration der Bypaßleitung und/oder des Steuerorgans aufwendiger und daher kostenintensiver; ein Nachteil, der noch durch den für das Gehäuse verwendeten Werkstoff an Bedeutung gewinnt, da dieser nur schwer zu bearbeiten ist.

Vor dem Hintergrund des oben Gesagten ist es die Aufgabe der vorliegenden Erfindung, eine aufgeladene Brennkraftmaschine gemäß dem Oberbegriff des Anspruchs 1 d. h. der gattungsbildenden Art bereitzustellen, die hinsichtlich der oben genannten Zielsetzungen, insbesondere hinsichtlich der Aufladung, optimiert ist.

Gelöst wird diese Aufgabe durch eine aufgeladene Brennkraftmaschine mit
- mindestens einem Zylinderkopf mit mindestens zwei Zylindern, bei dem jeder Zylinder mindestens eine Auslaßöffnung zum Abführen der Abgase aus dem Zylinder aufweist, wobei sich stromabwärts an jede Auslaßöffnung eine Abgasleitung anschließt, und
- mindestens einer Turbine, wobei
- die Abgasleitungen von mindestens zwei Zylindern unter Ausbildung eines integrierten Abgaskrümmers innerhalb des Zylinderkopfes zu einer Gesamtabgasleitung zusammenführen, und
- diese Gesamtabgasleitung mit der Turbine verbunden ist,
die dadurch gekennzeichnet ist, daß
- eine Abgriffstelle zur Entnahme von Abgas im Zylinderkopf an dem integrierten Abgaskrümmer vorgesehen ist, an der zumindest ein Teil des aus den Zylindern abgeführten Abgases dem Abgaskrümmer innerhalb des Zylinderkopfes entnehmbar ist, wobei sich stromabwärts der Abgriffstelle eine Bypaßleitung anschließt, mit der das entnommene Abgas an der Turbine vorbeiführbar ist.

Erfindungsgemäß zweigt die Bypaßleitung innerhalb des Zylinderkopfes von dem im Zylinderkopf integrierten Abgaskrümmer ab, was konstruktiv dadurch realisiert wird, daß eine Abgriffstelle zur Entnahme von Abgas im Zylinderkopf an dem integrierten Abgaskrümmer vorgesehen wird, an die sich die Bypaßleitung anschließt.

Der mindestens eine Zylinderkopf verfügt über einen vollständig im Zylinderkopf integrierten Abgaskrümmer, weshalb die Wegstrecken der einzelnen Abgasleitungen bis hin zur Gesamtabgasleitung vergleichsweise kurz sind. Dies führt zu einer kompakten Bauweise der Brennkraftmaschine und den eingangs beschriebenen Vorteilen, insbesondere der Möglichkeit einer motornahen Anordnung der Turbine und eines gegebenenfalls vorhandenen Abgasnachbehandlungssystems, was die Aufladung, insbesondere das Ansprechverhalten der Turbine, und die Abgasnachbehandlung verbessert. Der erfindungsgemäße Zylinderkopf grenzt sich insofern von Konzepten ab, bei denen der Krümmer nur teilweise integriert wird.

Bei der erfindungsgemäßen Brennkraftmaschine ist die Gesamtabgasleitung mit einer Turbine verbunden, so daß das Abgas stromaufwärts der Turbine gestaut wird, wodurch sich der Abgasdruck stromaufwärts der Turbine in der Gesamtabgasleitung und im Abgaskrümmer erhöht. Der erhöhte Abgasdruck im Krümmer sorgt für ein entsprechend großes Druckgefälle über die Bypaßleitung hinweg und gewährleistet auf diese Weise, daß auch große Mengen an Abgas via Bypaßleitung abgeblasen werden können. Der erhöhte Abgasdruck im Krümmer stellt zusammen mit den kürzeren Strömungswegen im integrierten Krümmer auch sicher, daß das aus sämtlichen Auslaßöffnungen in den Krümmer eingeleitete Abgas die Abgriffstelle erreichen bzw. über die Abgriffstelle aus dem Krümmer abgeführt werden kann.

Erfindungsgemäß wird auf die Anordnung der Bypaßleitung und eines Steuerorgans in der Turbine bzw. im Turbinengehäuse verzichtet. Dadurch nehmen das Volumen und das Gewicht der eingesetzten Turbine ab und die Fertigungskosten sinken, insbesondere auch infolge der wesentlich weniger aufwendigen Bearbeitung des Gehäuses. Günstig ist dies auch im Hinblick auf eine kompakte Bauweise der Brennkraftmaschine und der gesamten Antriebseinheit.

Damit wird die der Erfindung zugrunde liegende Aufgabe gelöst, nämlich eine aufgeladene Brennkraftmaschine gemäß dem Oberbegriff des Anspruchs 1 bereitzustellen, die insbesondere hinsichtlich der Aufladung optimiert ist.

Weist der mindestens eine Zylinderkopf drei oder mehr Zylinder auf und führen nur die Abgasleitungen von zwei Zylindern innerhalb des Zylinderkopfes zu einer Gesamtabgasleitung zusammen, handelt es sich bei einer Brennkraftmaschine, welche mit einem derartigen Zylinderkopf ausgestattet ist, um eine erfindungsgemäße Brennkraftmaschine.

Ausführungsformen des Zylinderkopfes mit beispielsweise vier in Reihe angeordneten Zylindern, bei denen die Abgasleitungen der außenliegenden Zylinder und die Abgasleitungen der innenliegenden Zylinder jeweils zu einer Gesamtabgasleitung zusammengeführt werden, sind ebenfalls erfindungsgemäße Zylinderköpfe.

Vorteilhaft sind aber Ausführungsformen, bei denen die Abgasleitungen sämtlicher Zylinder des mindestens einen Zylinderkopfes innerhalb des Zylinderkopfes zu einer einzigen Gesamtabgasleitung zusammenführen.

Weitere vorteilhafte Ausführungsformen der aufgeladenen Brennkraftmaschine werden im Zusammenhang mit den Unteransprüchen erörtert.

Vorteilhaft sind Ausführungsformen der aufgeladenen Brennkraftmaschine, bei denen die Abgriffstelle zur Entnahme von Abgas an der Gesamtabgasleitung vorgesehen ist. Die Gesamtabgasleitung wird vom gesamten Abgas, das aus den Zylindern über die Auslaßöffnungen in den Krümmer abgeführt wird, durchströmt, so daß auch die Abgriffstelle, wenn sie in der Gesamtabgasleitung vorgesehen ist, vom gesamten Abgas passiert wird. Dies erleichtert das Abblasen großer Abgasmengen, da ein Umlenken bzw. gewolltes Rückströmen einzelner Abgasströme in eine Teilabgasleitung bzw. Abgasleitung eines anderen Zylinders nicht erforderlich wird.

Vorteilhaft sind Ausführungsformen der aufgeladenen Brennkraftmaschine, bei denen
- jeder Zylinder mindestens zwei Auslaßöffnungen aufweist, und
- die Abgasleitungen von mindestens zwei Zylindern unter Ausbildung eines integrierten Abgaskrümmers innerhalb des Zylinderkopfes zu einer Gesamtabgasleitung zusammenführen, wobei zunächst die Abgasleitungen der mindestens zwei Auslaßöffnungen je Zylinder zu einer dem Zylinder zugehörigen Teilabgasleitung zusammenführen, bevor diese Teilabgasleitungen zu der Gesamtabgasleitung zusammenführen.

Wie bereits in der Beschreibungseinleitung erwähnt wurde, ist es während des Ausschiebens der Abgase im Rahmen des Ladungswechsels ein vorrangiges Ziel, möglichst schnell möglichst große Strömungsquerschnitte freizugeben, um ein effektives Abführen der Abgase zu gewährleisten, weshalb das Vorsehen von mehr als einer Auslaßöffnung je Zylinder vorteilhaft ist.

Das stufenweise Zusammenführen der Abgasleitungen via Teilabgasleitungen zu einer Gesamtabgasleitung trägt zu einer kompakteren d. h. weniger voluminösen Bauweise des Zylinderkopfes und damit insbesondere zu einer Gewichtsreduzierung und einem effektiveren Packaging im Motorraum bei. Zudem wird die Gesamtwegstrecke der Abgasleitungen des Abgaskrümmers weiter verkürzt.

Vorteilhaft sind Ausführungsformen der aufgeladenen Brennkraftmaschine, bei denen die Abgriffstelle zur Entnahme von Abgas an einer Teilabgasleitung vorgesehen ist. Eine zur Gesamtabgasleitung beabstandete Anordnung der Abgriffstelle bietet mehrere Vorteile. Insbesondere, wenn die Turbine direkt im Bereich der Gesamtabgasleitung am Zylinderkopf befestigt wird und die Platzverhältnisse zwangsläufig sehr beengt sind, sorgt die in Rede stehende Ausführungsform für eine Entlastung dieses Zylinderkopfbereiches, in dem die Gesamtabgasleitung aus dem Zylinderkopf austritt bzw. in die Turbine übergeht.

Die unmittelbare Anordnung der Turbine am Zylinderkopf führt nicht nur zu einer kompakteren Bauweise, sondern darüber hinaus auch zu einem geringeren Druckverlust im Abgas stromaufwärts der Turbine und zwar infolge der weniger starken bzw. nicht erforderlichen Umlenkung der Abgasströmung, insbesondere infolge einer nicht vorhandenen Krümmung der Gesamtabgasleitung. Die Folge ist eine erhöhte Enthalpie der Abgase am Turbineneintritt.

Vorteilhaft sind Ausführungsformen der aufgeladenen Brennkraftmaschine, bei denen die Abgriffstelle zur Entnahme von Abgas außenliegend am Abgaskrümmer d. h. an der den Zylindern abgewandten Seite des Krümmers angeordnet ist.

Führen die Abgasleitungen zunächst zu einer dem Zylinder zugehörigen Teilabgasleitung zusammen und hat die Brennkraftmaschine drei oder mehr Zylinder, sind Ausführungsformen der aufgeladenen Brennkraftmaschine vorteilhaft, bei denen die Abgriffstelle zur Entnahme von Abgas seitlich an der Teilabgasleitung eines außenliegenden Zylinders vorgesehen ist.

Die beiden zuletzt genannten Ausführungsformen sind vorteilhaft, weil die Zylinderkopfkonstruktion auf diese Weise nur geringfügig durch das Einbringen der Abgriffstelle bzw. der Bypaßleitung beeinflußt bzw. mechanisch geschwächt wird und die Auslegung des Zylinderkopfes vorrangig bezüglich anderer Erfordernisse bzw. Funktionen erfolgen kann. Die Länge der in den Zylinderkopf zu integrierenden Bypaßleitung verkürzt sich erheblich, wobei eine zumindest teilweise im Zylinderkopf integrierte Bypaßleitung von der Abgriffstelle bis zur Außenwandung des Zylinderkopfes führt. Bereits bestehende Zylinderkopfkonstruktion können gegebenenfalls durch geringfügige Modifikationen in einen erfindungsgemäßen Zylinderkopf überführt werden.

Die Anordnung der Abgriffstelle an der den Zylindern abgewandten Seite des Krümmers d. h. außerhalb des Abgaskrümmers gestattet zudem die geradlinige Ausführung einer in den Zylinderkopf zu integrierenden Bypaßleitung. Die Anordnung der Abgriffstelle außerhalb des Krümmers und die geradlinige Ausbildung der Bypaßleitung vereinfachen die Herstellung dieser Leitung erheblich. Eine geradlinige Bypaßleitung kann beispielsweise in einfacher Weise mittels Bohren von außen ausgebildet werden.

Für eine Motorenserie kann ein einheitlicher Zylinderkopfrohling gefertigt werden, in den durch Nachbearbeitung eine Bypaßleitung und Abgriffstelle zur Entnahme von Abgas eingebracht wird oder auch nicht.

Eine geradlinige Bypaßleitung, die am Zylinderkopf austritt, kann teilweise oder vollständig mittels spanabhebender Fertigungsverfahren in den Zylinderkopf eingebracht werden. Die Bypaßleitung kann auch bereits beim Gießen des Zylinderkopfrohlings teilweise oder vollständig ausgebildet werden, was durch Einbringen eines einfachen, nach außen offenen und daher leicht entfernbaren Kerns erfolgen kann.

Ausführungsformen der aufgeladenen Brennkraftmaschine, bei denen die Bypaßleitung zumindest teilweise im Zylinderkopf integriert ist, sind auch deshalb vorteilhaft, weil keine Leckageströme im Bereich der Abgriffstelle zu befürchten sind d.h. die Problematik hinsichtlich der Dichtigkeit der Bypaßleitung entfällt aufgrund der Integration und im Gegensatz zu einer außerhalb der Zylinderkopfes angeordneten Bypaßleitung.

Vorteilhaft sind insbesondere Ausführungsformen der aufgeladenen Brennkraftmaschine, bei denen in der Bypaßleitung ein Steuerorgan zur Einstellung des entnommenen Abgasstroms angeordnet ist. Das Steuerorgan kann beispielsweise eine Klappe oder ein Ventil umfassen und elektrisch, hydraulisch, pneumatisch, mechanisch oder magnetisch gesteuert werden, insbesondere auch mittels der Motorsteuerung der Brennkraftmaschine.

Das Steuerorgan kann unmittelbar am Zylinderkopf und in der Nähe der Abgriffstelle angeordnet sein. Dies ermöglicht gegebenenfalls die Kühlung des Steuerorgans mittels einer im Zylinderkopf vorgesehenen Flüssigkeitskühlung, was vorteilhaft ist, da das Steuerorgan durch die heißen Abgase thermisch hoch belastet ist. Gegebenenfalls kann ein Ventil bzw. eine Klappe des Steuerorgans aufgrund der Kühlung aus weniger temperaturfesten und damit kostengünstigeren Werkstoffen gefertigt werden. Grundsätzlich kann das Steuerorgan aber auch außerhalb und beabstandet zum Zylinderkopf vorgesehen werden.

Auch aus den zuvor genannten Gründen sind Ausführungsformen der aufgeladenen Brennkraftmaschine vorteilhaft, bei denen der mindestens eine Zylinderkopf mit einem integrierten Kühlmittelmantel ausgestattet ist.

Infolge der Integration mindestens eines Abgaskrümmers ist der erfindungsgemäße Zylinderkopf thermisch höher belastet als ein herkömmlicher Zylinderkopf, der mit einem externen Krümmer ausgestattet ist, weshalb höhere Anforderungen an die Kühlung gestellt werden.

Grundsätzlich besteht die Möglichkeit, die Kühlung in Gestalt einer Luftkühlung oder einer Flüssigkeitskühlung auszuführen. Aufgrund der wesentlich höheren Wärmekapazität von Flüssigkeiten gegenüber Luft können mit der Flüssigkeitskühlung wesentlich größere Wärmemengen abgeführt werden als dies mit einer Luftkühlung möglich ist.

Die Flüssigkeitskühlung erfordert die Ausstattung der Brennkraftmaschine bzw. des Zylinderkopfes mit einem Kühlmittelmantel d. h. die Anordnung von das Kühlmittel durch den Zylinderkopf führenden Kühlmittelkanälen. Die Wärme wird bereits im Inneren des Zylinderkopfes an das Kühlmittel, in der Regel mit Additiven versetztes Wasser, abgegeben. Das Kühlmittel wird dabei mittels einer im Kühlkreislauf angeordneten Pumpe gefördert, so daß es im Kühlmittelmantel zirkuliert. Die an das Kühlmittel abgegebene Wärme wird auf diese Weise aus dem Inneren des Zylinderkopfes abgeführt und in einem Wärmetauscher dem Kühlmittel wieder entzogen.

Vorteilhaft sind in diesem Zusammenhang Ausführungsformen der aufgeladenen Brennkraftmaschine, bei denen der Kühlmittelmantel mindestens einen Kühlmittelkanal aufweist, der auf der den mindestens zwei Zylindern abgewandten Seite des integrierten Abgaskrümmers angeordnet ist. Damit liegt der mindestens eine Kühlmittelkanal auf der Seite des Abgaskrümmers, auf der auch vorzugsweise die Abgriffstelle und folglich die Bypaßleitung angeordnet sind.

Vorteilhaft sind insbesondere Ausführungsformen der aufgeladenen Brennkraftmaschine, bei denen der im Zylinderkopf integrierte Kühlmittelmantel die Abgriffstelle und/oder Bypaßleitung und/oder das Steuerorgan zumindest teilweise umgibt.

Vorteilhaft sind Ausführungsformen der aufgeladenen Brennkraftmaschine, bei denen
- der Kühlmittelmantel einen unteren Kühlmittelmantel, der zwischen dem integrierten Abgaskrümmer und einer Montage-Stirnseite des mindestens einen Zylinderkopfes, an der dieser Zylinderkopf mit einem Zylinderblock verbindbar ist, angeordnet ist, und einen oberen Kühlmittelmantel, der auf der dem unteren Kühlmittelmantel gegenüberliegenden Seite des Abgaskrümmers angeordnet ist, aufweist, und
- beabstandet zum Abgaskrümmer an der den Zylindern abgewandten Seite des Abgaskrümmers in einer Außenwandung des Zylinderkopfes, aus der die Gesamtabgasleitung austritt, mindestens eine Verbindung zwischen dem unteren Kühlmittelmantel und dem oberen Kühlmittelmantel vorgesehen ist, die dem Durchtritt von Kühlmittel dient, wobei die mindestens eine Verbindung benachbart zu dem Bereich angeordnet ist, in dem die Abgasleitungen zu der Gesamtabgasleitung zusammenführen.

Damit ist im Zylinderkopf mindestens eine Verbindung des Kühlmittelmantels auf der den mindestens zwei Zylindern des Zylinderkopfes abgewandten Seite des integrierten Abgaskrümmers angeordnet. Die mindestens eine Verbindung liegt somit außerhalb des integrierten Abgaskrümmers. Bei der Verbindung handelt es sich um einen Kühlmittelkanal der oben bereits erwähnten Art, welcher vollständig in die Außenwandung integriert sein kann.

Vorteilhaft sind Ausführungsformen, bei denen der Abstand zwischen der mindestens einen Verbindung und der Gesamtabgasleitung kleiner ist als der Durchmesser eines Zylinders, vorzugsweise kleiner ist als die Hälfte bzw. ein Viertel des Durchmessers eines Zylinders, wobei sich der Abstand als Wegstrecke zwischen der Wandung der Gesamtabgasleitung und der Wandung der mindestens einen Verbindung ergibt.

Vorteilhaft sind Ausführungsformen der aufgeladenen Brennkraftmaschine, bei denen die Bypaßleitung mit einem stromabwärts der Turbine angeordneten Abgasnachbehandlungssystem verbunden ist. Durch das Abgasnachbehandlungssystem werden die Schadstoffemissionen reduziert.

Die erfindungsgemäße Brennkraftmaschine kann zusätzlich mit einer Abgasrückführung ausgestattet werden, insbesondere einer Abgasrückführung wie sie in der Europäischen Patentanmeldung 08100145.5 beschrieben ist.

Die Turbine kann mit einer variablen Turbinengeometrie ausgestattet werden, die eine weitergehende Anpassung an den jeweiligen Betriebspunkt der Brennkraftmaschine durch Verstellen der Turbinengeometrie bzw. des wirksamen Turbinenquerschnittes gestattet.

Grundsätzlich können zur Verbesserung der Drehmomentcharakteristik der Brennkraftmaschine auch mehrere Turbolader eingesetzt werden, deren Turbinen bzw. Verdichter in Reihe bzw. parallel angeordnet sind.

Vorteilhaft sind Ausführungsformen der aufgeladenen Brennkraftmaschine, bei denen die mindestens eine Turbine ein zumindest teilweise aus Blech geformtes Turbinengehäuse, vorzugsweise ein vollständig aus Blech geformtes Turbinengehäuse, aufweist.

Bei aus Blech geformten Gehäusen können Wandstärken von beispielsweise eineinhalb Millimeter realisiert werden, wohingegen gegossene Gehäuse Wandstärken zwischen drei und fünf Millimetern aufweisen.

Ein aus Blech gefertigtes Turbinengehäuse zeichnet sich zum einen durch ein vergleichsweise geringes Gewicht aus, was zur Reduzierung des Gesamtgewichts und damit des Kraftstoffverbrauchs beiträgt.

Zum anderen wird die thermische Trägheit des Gehäuses bzw. der Turbine durch die Verwendung von Blech zur Herstellung des Turbinengehäuses vermindert, was wie bereits beschrieben, vorteilhaft ist, da das Abgas am Eintritt in die Turbine eine höhere Temperatur und damit auch eine höhere nutzbare Abgasenthalpie aufweist und gegebenenfalls stromabwärts der Turbine angeordnete Abgasnachbehandlungssysteme während der Warmlaufphase schneller eine zur Konvertierung der Schadstoffe erforderliche Mindesttemperatur bzw. leichter eine zur Regeneration oder Reinigung erforderliche Betriebstemperatur erreichen.

Auf die häufig verwendeten nickelhaltigen Werkstoffe kann teilweise oder vollständig verzichtet werden, was Kostenvorteile bietet. Ein aus Blech geformtes Gehäuse weist geringere thermische Dehnungen auf als ein herkömmliches Turbinengehäuse. Das nach dem Stand der Technik üblicherweise zur Herstellung des Gehäuses eingesetzte Gußverfahren wird ersetzt durch ein Umformverfahren, wodurch die Herstellungskosten spürbar gesenkt werden.

Da erfindungsgemäß auf die Anordnung einer Bypaßleitung und eines Steuerorgans in der Turbine bzw. im Turbinengehäuse verzichtet wird, weist das Gehäuse eine vergleichsweise einfache Struktur auf, die sich für die Verwendung von Blech zur Herstellung des Gehäuses besonders eignet.

Grundsätzlich können auch Turbinengehäuse aus Feinguß bzw. Aluminiumguß eingesetzt werden. Zweiflutige Turbinen d. h. Turbinengehäuse zur Ausbildung zweiflutiger Turbinen sind ebenfalls ausführbar.

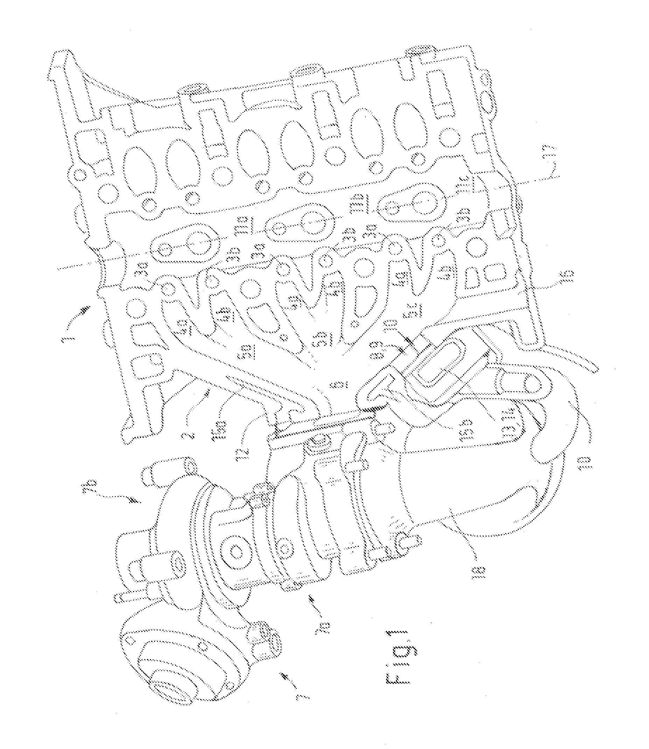

Im Folgenden wird die Erfindung anhand eines Ausführungsbeispieles gemäß der Figur 1 näher beschrieben. Hierbei zeigt:
- Fig. 1: schematisch die Anordnung eines Zylinderkopfes und eines Abgasturboladers einer ersten Ausführungsform der aufgeladenen Brennkraftmaschine in einer perspektivischen Draufsicht.

Der in Figur 1 dargestellte Zylinderkopf 1 verfügt über drei Zylinder 11a, 11b, 11c, die entlang der Längsachse 17 des Zylinderkopfes 1 in Reihe angeordnet sind. Es handelt sich folglich um den Zylinderkopf 1 eines Drei-Zylinder-Reihenmotors.

Jeder der drei Zylinder 11a, 11b 11c weist zwei Auslaßöffnungen 3a, 3b auf, wobei sich an jede Auslaßöffnung 3a, 3b eine Abgasleitung 4a, 4b zum Abführen der Abgase anschließt.

Die Abgasleitungen 4a, 4b sämtlicher Zylinder 11a, 11b, 11c führen unter Ausbildung eines integrierten Abgaskrümmers 2 innerhalb des Zylinderkopfes 1 zu einer Gesamtabgasleitung 6 zusammen. Dabei führen die Abgasleitungen 4a, 4b jedes Zylinders 11a, 11b, 11c zunächst zu einer dem Zylinder 11a, 11b, 11c zugehörigen Teilabgasleitung 5a, 5b, 5c zusammen, bevor diese Teilabgasleitungen 5a, 5b, 5c stromabwärts zu einer Gesamtabgasleitung 6 zusammenführen.

Das Abgas wird via Gesamtabgasleitung 6 aus dem Zylinderkopf 1 abgeführt und einer am Zylinderkopf 1 angeordneten Turbine 7a zugeführt. Die Turbine 7a ist Bestandteil eines Abgasturboladers 7, der neben der Turbine 7a auch über einen Verdichter 7b verfügt. Das durch die Turbine 7a hindurchgeführte Abgas wird über ein gekrümmtes Austrittsgehäuse 18 abgeführt bzw. weitergeleitet.

Der Zylinderkopf 1 ist des Weiteren mit einem Kühlmittelmantel ausgestattet. Dabei sind zwei Kühlmittelkanäle 15a, 15b des Kühlmittelmantels in der Außenwandung 12 des Zylinderkopfes 1, aus der die Gesamtabgasleitung 6 austritt, vorgesehen, wobei auf jeder Seite der Gesamtabgasleitung 6 jeweils ein Kühlmittelkanal 15a, 15b angeordnet ist.

Damit sind die beiden Kühlmittelkanäle 15a, 15b auf der den Zylindern 11a, 11b, 11c abgewandten Seite des Abgaskrümmers 2 angeordnet und zwar beabstandet zum Abgaskrümmer 2 und zur Gesamtabgasleitung 6.

Zur Entnahme von Abgas ist im Zylinderkopf 1 an dem integrierten Abgaskrümmer 2 eine Abgriffstelle 8 vorgesehen, an der zumindest ein Teil des aus den Zylindern 11a, 11b, 11c abgeführten Abgases dem Abgaskrümmer 2 innerhalb des Zylinderkopfes 1 entnommen werden kann, um an der Turbine 7a vorbei geführt zu werden.

Bei der in Figur 1 dargestellten Ausführungsform ist die Abgriffstelle 8 zur Entnahme von Abgas seitlich an der Teilabgasleitung 5c eines außenliegenden Zylinders 11c vorgesehen und damit beabstandet zur Gesamtabgasleitung 6, wobei die Abgriffstelle 8 auf der den Zylindern 11a, 11b, 11c abgewandten Seite des Abgaskrümmers 2 angeordnet ist.

Unter Ausbildung eines Eintrittsbereichs 9 für das zu entnehmende Abgas schließt sich stromabwärts der Abgriffstelle 8 eine Bypaßleitung 10 an, mit der das entnommene Abgas an der Turbine 7a vorbeigeführt wird. Die Bypaßleitung 10 ist teilweise im Zylinderkopf 1 integriert und mündet in das Austrittsgehäuse 18 der Turbine 7a. Auf diese Weise werden das dem Krümmer 2 im Zylinderkopf 1 via Bypaßleitung 10 entnommene Abgas und das durch die Turbine 7a hindurchgeführte Abgas zusammengeführt. Vorliegend wird das gesamte Abgas stromabwärts des Austrittsgehäuses 18 einem Abgasnachbehandlungssystem zugeführt (nicht dargestellt). Das im Zylinderkopf 1 integrierte Teilstück der Bypaßleitung 10 ist geradlinig ausgebildet.

Zur Einstellung des entnommenen Abgasstroms ist in der Bypaßleitung 10 ein Steuerorgan 13 vorgesehen, das vorliegend unmittelbar am Zylinderkopf 1 und in der Nähe der Abgriffstelle 8 angeordnet ist.

Das Steuerorgan 13 umfaßt eine Klappe 14, die drehbar gelagert in einem Gehäuse angeordnet ist. Durch Verschwenken der Klappe 14 wird die Bypaßleitung 10 mehr oder weniger freigegeben bzw. verschlossen.

Einer der beiden in der Außenwandung 12 integrierten Kühlmittelkanäle 15b ist in der Nähe der Abgriffstelle 8 bzw. der Bypaßleitung 10 angeordnet, nämlich zwischen der Gesamtabgasleitung 6 und der Bypaßleitung 10. Auf der diesem Kühlmittelkanal 15b abgewandten Seite der Abgriffstelle 8 ist eine ebenfalls im Zylinderkopf 1 integrierte Leitung 16 zur Rückführung von Abgas d.h. eine Abgasrückführleitung 16 vorgesehen, die - wie die Bypaßleitung 10 - von der Teilabgasleitung 5c eines außenliegenden Zylinders 11c abzweigt und geradlinig ausgebildet ist.

### Bezugszeichen

- 1: Zylinderkopf
- 2: Abgaskrümmer
- 3a: Auslaßöffnung
- 3b: Auslaßöffnung
- 4a: Abgasleitung
- 4b: Abgasleitung
- 5a: Teilabgasleitung
- 5b: Teilabgasleitung
- 5c: Teilabgasleitung
- 6: Gesamtabgasleitung
- 7: Abgasturbolader
- 7a: Turbine
- 7b: Verdichter
- 8: Abgriffstelle
- 9: Eintrittsbereich
- 10: Bypaßleitung
- 11a: Zylinder
- 11b: Zylinder
- 11c: Zylinder
- 12: Außenwandung
- 13: Steuerorgan
- 14: Klappe
- 15 a: Kühlmittelkanal
- 15b: Kühlmittelkanal
- 16: Abgasrückführleitung
- 17: Zylinderkopflängsachse
- 18: Austrittsgehäuse

## Patentansprüche

1. Aufgeladene Brennkraftmaschine mit
- mindestens einem Zylinderkopf (1) mit mindestens zwei Zylindern (11a, 11b, 11c), bei dem jeder Zylinder (11a, 11b, 11c) mindestens eine Auslaßöffnung (3a, 3b) zum Abführen der Abgase aus dem Zylinder (11a, 11b, 11c) aufweist, wobei sich stromabwärts an jede Auslaßöffnung (3a, 3b) eine Abgasleitung (4a, 4b) anschließt, und
- mindestens einer Turbine (7a), wobei
- die Abgasleitungen (4a, 4b) von mindestens zwei Zylindern (11a, 11b, 11c) unter Ausbildung eines integrierten Abgaskrümmers (2) innerhalb des Zylinderkopfes (1) zu einer Gesamtabgasleitung (6) zusammenführen, und diese Gesamtabgasleitung (6) mit der Turbine (7a) verbunden ist,
**dadurch gekennzeichnet, daß**
- eine Abgriffstelle (8) zur Entnahme von Abgas im Zylinderkopf (1) an dem integrierten Abgaskrümmer (2) vorgesehen ist, an der zumindest ein Teil des aus den Zylindern (11a, 11b, 11c) abgeführten Abgases dem Abgaskrümmer (2) innerhalb des Zylinderkopfes (1) entnehmbar ist, wobei sich stromabwärts der Abgriffstelle (8) eine Bypaßleitung (10) anschließt, mit der das entnommene Abgas an der Turbine (7a) vorbeiführbar ist.

2. Aufgeladene Brennkraftmaschine nach Anspruch 1, **dadurch gekennzeichnet, daß** die Abgriffstelle (8) zur Entnahme von Abgas an der Gesamtabgasleitung (6) vorgesehen ist.

3. Aufgeladene Brennkraftmaschine nach Anspruch 1 oder 2, **dadurch gekennzeichnet, daß**
- jeder Zylinder (11a, 11b, 11c) mindestens zwei Auslaßöffnungen (3a, 3b) aufweist,
- die Abgasleitungen (4a, 4b) von mindestens zwei Zylindern (11a, 11b, 11c) unter Ausbildung eines integrierten Abgaskrümmers (2) innerhalb des Zylinderkopfes (1) zu einer Gesamtabgasleitung (6) zusammenführen, wobei zunächst die Abgasleitungen (4a, 4b) der mindestens zwei Auslaßöffnungen (3a, 3b) je Zylinder (11a, 11b, 11c) zu einer dem Zylinder (11a, 11b, 11c) zugehörigen Teilabgasleitung (5a, 5b, 5c) zusammenführen, bevor diese Teilabgasleitungen (5a, 5b, 5c) zu der Gesamtabgasleitung (6) zusammenführen.

4. Aufgeladene Brennkraftmaschine nach Anspruch 3, **dadurch gekennzeichnet, daß** die Abgriffstelle (8) zur Entnahme von Abgas an einer Teilabgasleitung (5a, 5b, 5c) vorgesehen ist.

5. Aufgeladene Brennkraftmaschine nach einem der vorherigen Ansprüche, **dadurch gekennzeichnet, daß** die Abgriffstelle (8) zur Entnahme von Abgas außenliegend am Abgaskrümmer (2) an der den Zylindern (11a, 11b, 11c) abgewandten Seite des Krümmers (2) angeordnet ist.

6. Aufgeladene Brennkraftmaschine nach einem der Ansprüche 3 bis 5 mit mindestens drei Zylindern (11a, 11b, 11c), **dadurch gekennzeichnet, daß** die Abgriffstelle (8) zur Entnahme von Abgas an der Teilabgasleitung (5a, 5c) eines außenliegenden Zylinders (11a, 11c) vorgesehen ist.

7. Aufgeladene Brennkraftmaschine nach einem der vorherigen Ansprüche, **dadurch gekennzeichnet, daß** die Bypaßleitung (10) zumindest teilweise im Zylinderkopf (1) integriert ist.

8. Aufgeladene Brennkraftmaschine nach einem der vorherigen Ansprüche, **dadurch gekennzeichnet, daß** in der Bypaßleitung (10) ein Steuerorgan (13) zur Einstellung des entnommenen Abgasstroms angeordnet ist.

9. Aufgeladene Brennkraftmaschine nach Anspruch 8, **dadurch gekennzeichnet, daß** der mindestens eine Zylinderkopf (1) mit einem integrierten Kühlmittelmantel ausgestattet ist.

10. Aufgeladene Brennkraftmaschine nach Anspruch 9, **dadurch gekennzeichnet, daß** der Kühlmittelmantel mindestens einen Kühlmittelkanal (15a, 15b) aufweist, der auf der den mindestens zwei Zylindern (11a, 11b, 11c) abgewandten Seite des integrierten Abgaskrümmers (2) angeordnet ist.

11. Aufgeladene Brennkraftmaschine nach Anspruch 9 und 10, **dadurch gekennzeichnet, daß** der im Zylinderkopf (1) integrierte Kühlmittelmantel die Abgriffstelle (8) und/oder die Bypaßleitung (10) und/oder das Steuerorgan (13) zumindest teilweise umgibt.

12. Aufgeladene Brennkraftmaschine nach einem der vorherigen Ansprüche, **dadurch gekennzeichnet, daß** die Bypaßleitung (10) mit einem stromabwärts der Turbine (7a) angeordneten Abgasnachbehandlungssystem verbunden ist.
